Europäisches Patentamt

European Patent Office

Office européen des brevets

(19)

(11) **EP 0 444 441 B1**

(12) **EUROPEAN PATENT SPECIFICATION**

(45) Date of publication and mention
of the grant of the patent:
**25.09.1996  Bulletin 1996/39**

(51) Int Cl.[6]: **G01N 30/04**, G01N 30/34,
G01N 30/08

(21) Application number: **91101528.7**

(22) Date of filing: **05.02.1991**

(54) **Minimizing eluate band widths in liquid chromatography**

Minimierung von Eluatbandbreiten in der Flüssigchromatographie

Minimisation de la largeur des bandes d'éluats en chromatographie en phase liquide

(84) Designated Contracting States:
**CH DE GB LI SE**

(30) Priority: **01.03.1990  US 487332**

(43) Date of publication of application:
**04.09.1991  Bulletin 1991/36**

(73) Proprietor: **Hewlett-Packard Company
Palo Alto, California 94304 (US)**

(72) Inventor: **Zavitsanos, Apostolos Paul
Dollard des Ormeaux, Quebec, H9g1Y9 (CA)**

(74) Representative: **Schoppe, Fritz, Dipl.-Ing.
Patentanwalt,
Georg-Kalb-Strasse 9
82049 Pullach (DE)**

(56) References cited:
EP-A- 0 061 912          EP-A- 0 155 852
EP-A- 0 288 425          WO-A-84/04329
WO-A-87/02678          WO-A-89/12643
WO-A-90/12030          US-A- 4 715 217
US-A- 4 732 683

• JOURNAL OF HIGH RESOLUTION
CHROMATOGRAPHY vol. 13, no. 2, February
1990, HEIDELBERG DE, pages 138-141; I.A.
FOWLIS : 'Solute focusing in LC by on-line
dilution'

EP 0 444 441 B1

## Description

The present invention relates to chemical analysis systems.

Analytical chemistry has advanced our understanding of living systems by breaking down complex molecules, such as proteins, into components that can then be separated for identification and quantitation. For example, Edman degradation sequentially yields the amino acids that constitute a peptide so that their order in the peptide can be determined. Chromatography can contribute to this determination by separating the component products of the Edman degradation.

In high performance liquid chromatography (HPLC), a sample is injected onto a column packed with a stationary phase, *e.g.*, a solvent absorbed by a supporting substance. A mobile phase, generally a liquid solvent, is then passed through the stationary phase, ushering the sample through the column. As the sample passes through the column, each chemical species component of the sample is partitioned between the stationary phase and the mobile phase. For a given set of conditions, each component has a characteristic distribution coefficient, $K_d$, which is defined as

$$K_d = C_s / C_l$$

where $C_s$ is the concentration of the species in the stationary phase, and $C_l$ is the concentration of the species in the mobile phase.

Separation is achieved by selective component retention by the column. Retention time for a component is related to its capacity factor k', which can be expressed as the product of the distribution coefficient and stationary phase volume divided by the interstitial mobile phase volume. Separation of different components requires that they have different k' values. If the capacity factors of different sample components are too small, the separation will be poor. Large values of k' improve separations but increase band width and lengthen analysis times.

Ideally, sample components pass through the separation column in relatively discrete bands. The bands then emerge from the separation column in increasing order of their distribution coefficients. An appropriately selected and arranged detector can detect these bands *seriatim* as they pass. A recorder may then record the eluate peaks by plotting the amount of component emerging from the column against time. Components can be identified by the time of retention by the column and can be quantified by the corresponding detection peak area, which corresponds to the amount of the component responsible for the peak. In some cases, the emerging bands can be collected in separate containers for a distinct identification and/or quantitation process.

Concentration detectors, especially ultraviolet (UV) detectors, are commonly used to detect and quantify analytes as they elute from a separation column. The sensitivity of such detectors is a limiting factor when very small quantities of individual analytes are present. For example, UV detectors can have difficulty detecting and identifying the picomole quantities of phenylthiohydantoin amino acids often yielded by sequencing procedures. In such cases, it is critical that the concentration of an analyte as it passes by such a detector be as great as possible to enhance the likelihood of detection and accuracy of quantification. For a given analyte and a given linear flow rate, chromatographs with smaller bore columns yield more concentrated analyte peaks. Detection sensitivity can also be enhanced by increasing peak amplitude and peak resolution. For a fixed quantity of a component, narrowing a peak necessarily increases the peak amplitude and increases its separation from neighboring peaks. Minimizing the width of eluate bands thus increases the effective sensitivity of the chromatograph.

The width of eluate bands is determined by the width of the initial sample plug and by factors that cause the bands to broaden as they pass through the column. Initial sample plug width can be decreased by injecting a smaller volume of sample solution. However, if this is done without increasing the concentration of analytes in the solution, there can be insufficient component quantities for detection. On the other hand, sufficient solvent is required to ensure that all components are dissolved, thereby limiting the sample concentrations attainable. Moreover, when the total mass of sample is limited, it is often necessary to prepare a relatively larger volume of solution to ensure that the entire sample is dissolved, so that a major portion of the sample can be injected.

Analytes in a chromatographically weak solvent distribute preferentially to a solid phase. The analyte molecules reaching the solid phase earliest are thus "held up" while upstream analyte molecules "catch up", causing the analytes to be concentrated at the head of the column. Thus, on-column enrichment results in a narrower sample plug initially. The introduction of a chromatographically strong mobile phase causes the analytes to elute through the column at rates corresponding to their k' values. While band broadening inevitably occurs during separation, the eluting bands are narrower to the extent that enrichment narrowed the initial sample plug. The narrower bands correspond to greater analyte concentrations, which provides for greater detection sensitivity. On-column enrichment thus enhances the detection and quantification of analytes, especially when small quantities are involved. See P. Schauwecker *et al.* in "Trace Enrichment Techniques in Reversed-Phase High-Performance Liquid Chromatography," *Journal of Chromatography* 136 (1977) 63-72.

When sample components have a large range of k' values, two problems are encountered with on-column enrichment. The first is that the solvent chosen to accommodate the on-column enrichment process may result in very high k' values for some components and thus cause excessive band broadening. This problem is typically overcome by using gradient elution.

Gradient elution is used to decrease the band broadening that occurs with complex samples. In gradient elution, the chemical composition of the mobile phase is changed during a chromatographic analysis. In reverse-phase gradient elution, a method commonly used in the separation of complex samples, the initial mobile phase is polar relative to the stationary phase and becomes increasingly nonpolar. Before the mobile phase becomes nonpolar, nonpolar components are preferentially distributed in the stationary phase and the polar components advance through the column. As the mobile phase is gradually changed to nonpolar, the nonpolar components begin to separate and follow the polar components through the column. The method shortens the time that nonpolar compounds are retained on the column and therefore reduces diffusion. In addition to reducing analysis time, gradient elution improves peak shape and thus increases effective detection sensitivity.

The second problem encountered with on-column enrichment techniques is that a solvent which is weak enough chromatographically to allow on-column enrichment may not be strong enough to dissolve all the sample components. Thus, for some components, the sample amount injected may be limited by the component solubility and any detection enhancement advantage of on-column enrichment is lost. If, on the other hand, a stronger solvent is chosen for sample dissolution purposes, it may be too strong to allow on-column enrichment for components with low k' and the elution bands for such components may be dominated by the injection volume size (no on-column enrichment effect for those components).

The phenylthiohydantoin amino acids produced by Edman degradation represent this kind of sample. The solvents which are typically used for sample dissolution do not allow effective on-column enrichment for the more polar components. When trying to increase detectability by reducing the column dimensions, it has been found that band broadening increases for the early eluting polar components sufficiently to reduce substantially any advantage provided by the smaller column diameter. This can be overcome by reducing the injection volume, but reducing injection volume has other problems. Since it is the sample amount (mass) which is limited, it is desirable to inject as large a fraction of the sample as possible. As the injection volume decreases then, the total sample volume must also be decreased. Practical lower solvent volumes for sample dissolution in most situations are 20 to 50 microliters ($\mu$L). At best, the current implementations represent a poor compromise between detectability, reproducibility, and solubility.

The described approaches to minimizing band width have not been optimal. What is needed is a chromatographic method which minimizes eluate band widths for complex samples containing both polar and nonpolar components. Preferably, such a method would be effective for separating the typical products of an Edman degradation, and would minimize both the initial sample plug width and on-column band broadening effects.

EP-A-0288425 discloses a surfactant used to denaturate a sample. A detergent, a type of surfactant, is used to lyse cell walls, for example in E. coli so that DNA can be isolated.

WO-A-8404329 discloses the use of a surfactant to aid in the extraction of enzymes from Z. Mobilus Bacterium cells.

EP-A-0155852 discloses the use of a surfactant to aid in the extraction of a thrombin-binding substance from a human placenta by increasing the solubility.

WO-A-8702678 discloses the use of a surfactant to effect the selected solubilization of a major iron-related protein (MIRP) of a gonococcal species. Additional soluble materials are selectively precipitated with the same surfactant under substantially the same conditions. Certain homologous proteins have been reported to interact with detergent micelles, but MIRP does not appear to interact with micelles. MIRP binds to its stationary phase even in the presence of the cationic detergent and MIRP elutes as a single peak that appears to be substantially enriched.

US-A-4715217 discloses the use of a surfactant to increase the solubility of an analyte so that a concentration of analyte above its solubility limit in water can be analyzed. The surfactant is used to emulsify the analyte; the highest surfactant concentration is above one half of the critical micelle concentration

US-A-4732683 relates to a method for purifying alpha interferon. To introduce production of alpha interferon, cells are mixed with a virus. As part of the purification, the virus that has been used to induce interferon production is inactivated by treatment with a detergent. The treatment with a detergent is found to increase the collection of materials released from lysing virus.

WO-A-8912643 relates to a use of a detergent to increase the solubility of analytes. Liver membranes prebound with vasopressin are subjected to differential solubilization using a detergent, by incubating the membrane with a relatively low concentration of a detergent, separating insoluble material and treating this material with a higher concentration of detergent. Prebinding with vasopressin shifts the molecular weight of the reconstitutable binding activity to a significantly higher molecular weight and binding activity elutes in a sharper peak.

WO-A-9012030 relates to a surfactant used for both disruption of bacteria and rickettsial bodies and for solubilization.

EP-A-0061912 discloses the use of a detergent to remove sample contaminants by improving the solubility of the contaminants before introducing the sample onto an anion exchange column. The detergent increases the capacity factor of the contaminants so that they can be flushed through the column.

Ian A. Fowlis, "Solute Focusing in LC by On-Line Dilution", Journal of High Resolution Chromatography, pp. 138-143, Vol. 13, February 1990, relates to a reverse-phase elution and an initial dissolution of analytes in a polar solvent to form an initial solution. This initial solution is diluted with nonpolar solvents before being introduced onto a precolumn. The dilution with nonpolar solvent has the effect of increasing the analyte capacity factor, and thus concentrating analyte on a precolumn support. This results in a enrichment during a chromatographic elution.

## SUMMARY OF THE INVENTION

In accordance with the present invention, a sample for analysis by a chromatographic system is mixed with a surfactant prior to chromatographic separation. Surfactant can be mixed with the sample prior to injection onto the column. Components of the sample are then separated by passing one or more mobile phase solvents through the column so that the components separate into eluate bands. The components can be detected and quantitated by a suitable detector.

A major advantage of the present invention is that it allows on-column enrichment of a sample with a wide range of k' values using a chromatographically weak solvent. As a result, more concentrated analyte peaks and, thus, more sensitive detection and quantitation are provided. Empirical studies indicate that thus enhanced sensitivity is attained without a comparable decrease in band separation in the eluting bands. In effect, the addition of surfactant causes the range of polarities to be compressed temporarily for the purpose of on-column enrichment in preparation for a separation during which the range of polarities is at least partially restored.

Where the sample size and column bore size are treated as given, the present invention provides for a narrower sample plug and thus greater resolution of eluting peaks. Where the sample size and maximum sample plug width are treated as given, the on-column enrichment allows a smaller bore column to be used. This corresponds to greater analyte concentrations in eluting bands. In turn, this provides greater detection sensitivity where UV or other concentration detectors are used.

Depending on the particular surfactant and analytes involved, the surfactant may maintain an decreased effective polarity of the analytes during separation. In this case, the band-broadening of nonpolar analytes can be decreased. In addition, the required range of polarities of the mobile phase is reduced, minimizing the duration of the separation process. As a result, speedier analyses and increased loading capacity of a chromatographic system are provided for.

Thus, the present invention provides for on-column enrichment of concentrated sample plugs containing analytes with a wide range of polarities. This in turn provides for more sensitive detection and more precise quantitation of analyte peaks. The novel method is particularly compatible with protein microsequencing analysis accomplished by commercially available automated protein sequencers using the Edman degradation method. These and other features and advantages provided by the present invention are apparent in the description below with reference to the following drawings.

## BRIEF DESCRIPTION OF THE DRAWINGS

FIGURE 1 is a schematic illustration of an analytical system in which the method of the present invention is practiced.

FIGURE 2 is a detailed view of a portion of a chromatography column of the system of FIG. 1.

FIGURE 3 is a flow chart of the method of the present invention.

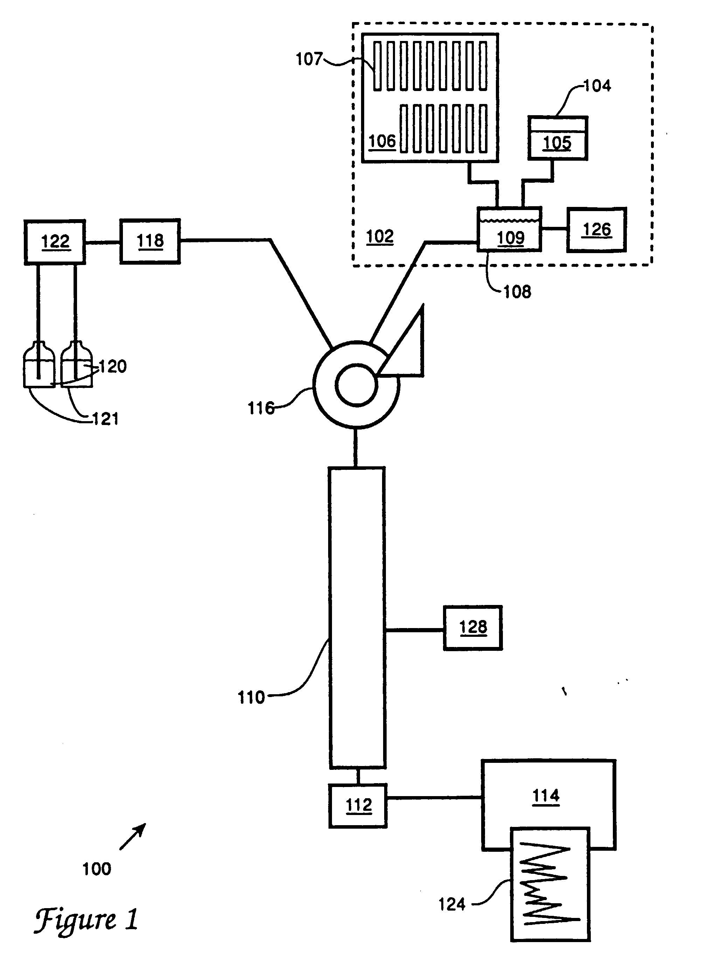

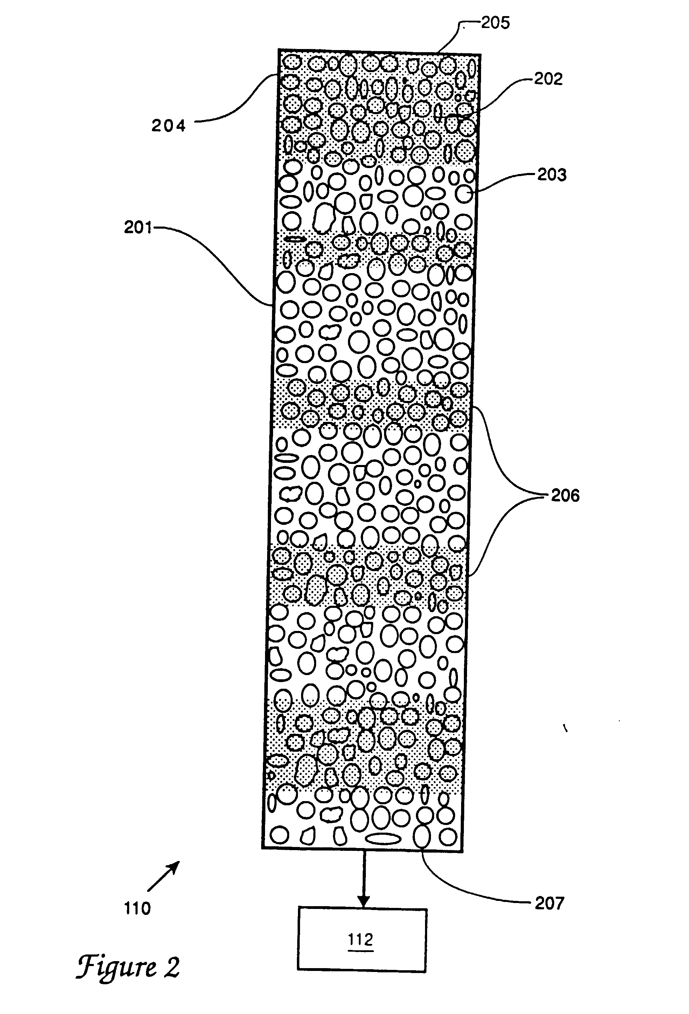

In the figures, a three-digit number referring to an element of the drawings has as its first digit the figure number in which the element is introduced in the description below. For example, chromatographic column 110 is first introduced with reference to FIG. 1 and stationary phase packing material 203 is first introduced with reference to FIG. 2. This is intended to aid the reader in locating referents.

## DESCRIPTION OF THE PREFERRED EMBODIMENTS

A chromatographic system 100 comprises a sample preparation device such as a protein sequencer 102, a sample manipulator 104, a sample 105 containing analytes, a source 106 of preparation solvents, cleaving solvents, and surfactants, a reservoir 108, a chromatographic column 110, a detector 112, and a processor 114, as shown in FIG. 1. In accordance with the present invention, a surfactant 107 stored in source 106 is mixed with a sample 105 issuing from sample manipulator 104 to yield a sample-surfactant mixture 109 which is stored in a sample-surfactant reservoir 108. Sample-surfactant mixture 109 is then injected by a sample injector 116. A column pumping system 118 pumps mobile phase solvents 120, stored in reservoirs 121, through column 110. The composition of the mobile phase solvent is mediated by a gradient programmer 122. The temperatures of sample-surfactant reservoir 108 and column 110 are controlled by temperature controllers 126 and 128, respectively.

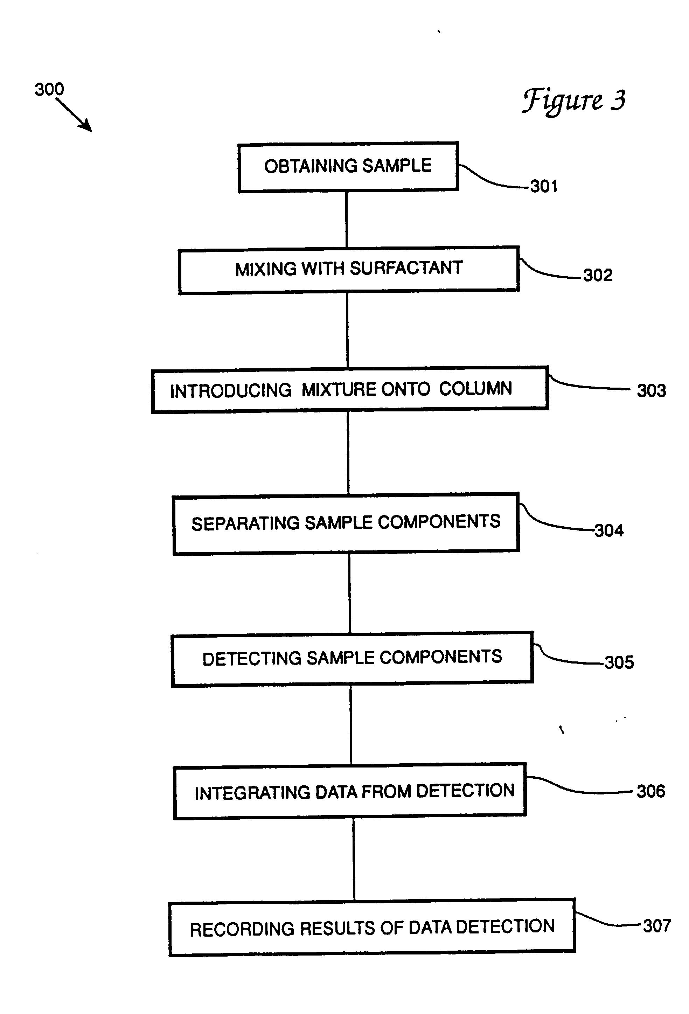

In accordance with a method 300 of the present invention, a sample is obtained, at step 301 of FIG. 3, using sequencer 102. The sample is mixed with surfactant 107 at step 302. Resulting mixture 109 is introduced, at step 303, onto chromatographic column 110. Sample components are separated, at step 304, during elution and are detected by detector 112 at step 305. The output is processed, at step 306, by processor 114, and the results are recorded, at step 307, as chromatogram 124.

Column 110 comprises an elongated stainless steel tube 201 filled with packing 203 of octadecyl silane-modified silica spheres, as shown in FIG. 2. Packing 203 serves as the stationary phase for elution. Column 110 has a column head 204 where a sample plug 202 is formed after mixture 109 is introduced through an inlet end 205. Tube 201 has an inner diameter of about 2.1 millimeters (mm) and is 10-30 centimeters (cm) long. As the mobile phase is introduced, mixture 109 separates into component bands 206, which exit tube 201 through its outlet end 207 and progress past detector 112 for detection. Detector 112 is a UV-visible spectrophotometer which measures the absorbance and/or the absorption spectra of components. The concentrations of the respective analytes are readily calculable from the absorbances of component bands 206.

Sample 105 is provided by sequencer 102 which implements an Edman degradation procedure useful in peptide analysis. Edman degradation can produce picomole quantities of samples containing components with a wide range of polarities. The sample output from sequencer 102 is collected and dried.

Surfactant 107 is preferably sodium dodecyl sulfate. The concentrated sodium dodecyl sulfate is prepared in a 0.1% aqueous solution for mixture with the sample. The surfactant is stored in surfactant source 106. Fifty to one hundred $\mu$l of the surfactant solution is mixed with the dried sample. Sample-surfactant mixture 109 is immediately injected onto column 110 via injector 116.

By way of explanation, it is suggested that the addition of surfactant to the sample causes the formation of micelles of nonpolar components. In micelles, surfactant particles cluster around nonpolar analyte molecules with polar portions of the surfactant on the surface of the cluster. Micelle formation is addressed by Rosen & Goldsmith in Systematic Analysis of Surface-Active Agents (Wiley, New York, 2d ed. 1972), pp. 18 ff Nonpolar molecules in micelles will dissolve in polar solvents. A sufficiently polar solvent can thus be used so that both polar and nonpolar components are initially preferentially retained by the stationary phase 203. Polar components can thus be trapped along with nonpolar components at the column head 204 prior to elution. The trapping concentrates the components per volume of sample, which leads to narrower eluate bands 206.

Still by way of explanation, it is believed that the micelles disintegrate or otherwise transform as the mobile phase dilutes the injection solvent and ushers it through the column and away from the molecules bound to the solid phase at the column head. As the micelles break up, the previously micellar molecules at least partially regain their normal chromatographic character. The surfactant, including that associated with the micelles, elutes prior to the analytes and/or is not detected, thus avoiding interference with the peaks of interest. As the mobile phase becomes increasingly nonpolar, the less polar molecules partition preferentially into the mobile phase and elute.

The disintegration of micelles with the dilution of the surfactant-bearing injection solvent comports with the finding that a minimum surfactant concentration is required to effect the dissolution of nonpolaar analytes in a polar solvent. For example, the solubility of nonpolar analytes in water increases substantially at concentrations above or about 0.1% sodium dodecyl sulfate in water. In accordance with the foregoing explanation, it is suggested that elevated mixture temperatures can enhance enrichment by increasing micellar solubility. Therefore, temperature controller 126 is provided for heating reservoir 108.

Injector 116 includes a valve loop injector under sequencer control. The injector removes at least some of the mixture from reservoir 108 and injects the mixture onto column 110. Once the sample is injected, injector 116 couples column pumping system 118 to column 110 so that elution can begin.

Column pumping system 118 forces one or more mobile phase solvents 120 through column 110. The mixture of one or more of the mobile phase solvents can be varied by mediation of gradient programmer 122 to decrease the polarity of the mobile phase. The gradient program can provide for gradual or stepwise gradient elution as desired. The polar and the entrained nonpolar components are then separated as they pass through column 110 to detector 112. Any change in the capacity factor k' caused by the action of the surfactant must be accounted for when identifying components by their time of elution as reflected in chromatogram 124.

The widths of the eluate bands 206 at detector 112 depend on four factors: 1) the width of sample plug 202; 2) diffusion over time; 3) the effect of the mass transfer kinetics as the component continually moves between the stationary and mobile phases; and 4) the multipath effect, in which the band broadens as different molecules take different paths through the stationary phase and thus take different amounts of time to pass through the column 110. R. P. W. Scott, Small Bore Liquid Chromatography Columns (Wiley, New York, 1984), pp. 11-21.

The disclosed approach minimizes band broadening due to all four factors outlined above, leading to novel chromatograph sensitivity and resolution. In addition, the minimization of band width improves overall column efficiency. The combination of improved sensitivity, improved peak resolution, and improved column efficiency enhances the utility and accuracy of chromatographic system 100.

The first factor, sample plug width, is an important contributor to band breadth. Mixing surfactant with the sample permits polar components to be concentrated along with nonpolar components at column head 204 when a polar solvent is used for on-column enrichment. A major advantage is that a relatively large sample comprising both polar and nonpolar components, such as the product of an Edman degradation, can be enriched at the beginning of a reverse-phase gradient elution. The initial enrichment results in minimal width of sample plug 202, thus enhancing peak detection and improving the effectiveness of a chromatographic analysis.

The present invention minimizes diffusion that occurs as the sample passes through the chromatographic column 110. Longitudinal diffusion broadens eluate bands 206 as they pass through the column 110. Diffusion is proportional to the length of time a component remains in a column. Because the present invention allows for the use of a shorter column 110, a separation takes less time and minimal diffusion occurs.

The present invention also minimizes the mass transfer effect. Resistance to the mass transfer of a component between the stationary and mobile phases also causes the eluate bands 206 to broaden as they pass through the column 110. While partitioning ratios differ among components, the molecules of any one component at any time will be divided between the mobile phase and the stationary phase, and thus move at different rates from each other. Despite averaging effects over the length of the column, zone broadening is induced by the partitioning.

Mass transfer band broadening is reduced where on-column equilibria are clearly defined and mass transfer proceeds rapidly between the phases. The electrostatic interactions between polar or ionic solutes and solvents generally lead to more clearly defined component partitioning. To the extent that micelle disintegration is only partial, the electrostatic interaction of nonpolar components may be enhanced and the mass-transfer dispersion of nonpolar components minimized.

The mass transfer effect can be decreased further by increasing the desorption rate of the stationary phase. This can be achieved by reducing the flow velocity of the mobile phase. However, decreased flow velocity increases diffusion, limiting the utility of this approach. Here, since method 300 results in a narrower plug, diffusion is minimized. Since diffusion is minimized, flow velocity may be reduced so as to minimize the mass transfer effect.

Method 300 also minimizes band broadening due to the multipath effect, which refers to the different distances traveled by different molecules. For example, some molecules travel open pathways and travel through the column in a relatively short time. Others travel obstructed pathways and take a relatively longer time to pass through the column. These variations occur due to nonuniformity of the stationary phase packing material in the column. Because the present invention allows the use of a smaller bore column, the path differentials that create the multipath effect, and the resulting band broadening, are minimized.

In some cases, the surfactant can continue to affect the polarity of nonpolar molecules. In such cases, the invention can eliminate the need for gradient elution. Some nonpolar components injected according to the disclosed method mimic the behavior of polar components to the extent that they may be eluted in an isocratic (single mobile phase) elution.

In the preferred embodiment, a 0.1% aqueous solution of sodium dodecyl sulfate is prepared. Water used in the preparation of the aqueous solution must be purified and deionized, as, for example, by a HP661A water purifier (manufactured by Hewlett-Packard Co., USA). The water can be two times glass-distilled or quartz-distilled, avoiding contact with plastic, which causes ghost peaks. Alternative embodiments use solutions of lower concentrations, greater concentrations, or undilute surfactant.

The increased effectiveness of the system resulting from the present invention allows the use of a shorter column 110, or alternatively allows the separation of more complex samples. The time of analysis can be decreased, so that a sample that decomposes within hours, such as some components of the product of Edman degradation, can be injected without delay and processed rapidly.

Although in the preferred embodiment mixing occurs by diffusion in the sample-surfactant reservoir 108, other mixing methods are compatible with the invention. The mixing of the surfactant and sample can be accomplished by adding the surfactant to the sample and blending them, or by any other method of combination of sample and surfactant. The sample and surfactant can be manually mixed before injection onto column 110. The samples can be injected simultaneously onto the column so that they mix during injection. The sample can be injected onto a surfactant-filled head. The surfactant can be injected onto the sample plug. In an alternative embodiment, the surfactant can include Tween 80, a preparation of polyoxyethylenated sorbitan monooleate manufactured by Atlas Chemical Industries, Wilmington, Delaware, either in addition to or in place of sodium dodecyl sulfate, and with or without the use of another surfactant.

Surfactants can include ionic, nonionic, ampholytic, and cationic surfactants. In addition to Tween 80, nonionic surfactants can include Tween 20, a preparation of polyoxyethylenated sorbitan monolaurate also manufactured by Atlas Chemical Industries, and other esters, ethers, and glycols, including long-chain carboxylic esters of glycols, glucosides, and sorbitols; ethers of glycols, such as alkyl and alkylphenyl ethers of (poly)oxyethylene glycols; and polyoxyethylenated polyoxypropylene glycols. Anionic surfactants can include metal alkyl sulfates, such as magnesium dodecyl sulfate. Anionic surfactants can also include a wide range of metal salts, such as metal salts of sulfated glycerides, or of sulfated long-chain carboxylic acids. Cationic and ampholytic surfactants can include quaternary ammonium salts and [N, N', N''-alkyl'alkyl''ammonio]alkanesulfonate. Mobile phase solvents solvents can include water, methanol, and sodium citrate. The invention also applies to non-aqueous elutions, as for example a pentane to methylene chloride gradient elution. Other non-aqueous sovent pairs can include isopropyl chloride-pentane, ether-pentane, and methanolether.

The present invention is applicable to a wide range of sample materials, including peptides such as proteins, protein fragments, peptide chains, and peptide fragments, and to soils and pesticide analyses, and analyses of endogenous and exogenous blood components. Other sequencers are compatible with the invention, including sequenators. Other sources for the eluted sample are also provided for.

Alternative means for sample injection may also be used, including an automatic sample injector with a syringe which is guided by robot control. Other detectors are also compatible with the invention. If a fused-silica tube is used, quantitative concentration measurements can be taken without disturbing equilibria under consideration, and thus can be used to detect eluate bands 206 while they are still on column 110.

## Claims

1. A method (300) for separating the component analytes of a sample (105), said analytes having a range of polarities in a chromatographic column (110), said samples having at least one relatively polar analyte and at least one relatively nonpolar analyte, said method comprising the steps of:

mixing (302) sufficient surfactant with said sample in a relatively chromatographically weak solvent so as to form a solution (109) containing micelles of said nonpolar analyte;

introducing (303) said solution containing said micelles and said polar analyte onto the head of said chromatographic column, the concentration of this surfactant being choosen such that said micelles are maintained at least until predominant portion of said sample is on the head (204) of said column; and

separating (304) said analytes by reverse phase gradient elution through said column, said reverse phase gradient elution proceeding from said relatively chromatographically weak solvent to a relatively chromatographically strong solvent so that said micelles break up during said reverse phase gradient elution.

2. The method of claim 1 wherein said surfactant includes an anionic surfactant.

3. The method of claim 1 wherein said surfactant includes a cationic surfactant.

4. The method of claim 1 wherein said surfactant includes a nonionic surfactant.

5. The method of claim 1 wherein said surfactant includes sodium dodecyl sulfate.

6. The method of claim 1 in which said sample analytes are collected in a collector means after separation.

7. The method of claim 1 comprising the steps of:

preparing an aqueous solution of surfactant (107); preparing a sample (105) containing analytes by drying said sample; mixing (302) said aqueous solution of surfactant with said sample to produce a sample-surfactant mixture (109); introducing (303) said sample-surfactant mixture onto a chromatographic column (110), said column being packed with a suitable packing material (203); separating (304) said sample components by flowing a mobile phase through said column; detecting (305) the presence of at least one of said sample components; integrating (306) data obtained through said detection; and recording (307) the results of said detection.

8. The method of claim 7 wherein said mobile phase includes plural mobile phase solvents (120) which are mixed together before introduction onto said column (110) so that said mobile phase strength can be continuously varied during the separation so that the k'values of the analytes are decreased over time.

9. The method of claim 7 wherein said mobile phase includes plural mobile phase solvents (120) in which the analytes have different k'values, and wherein said solvents are introduced onto the separation means sequentially so that the k'values of said analytes can be varied in a stepwise manner during the separation.

10. The method of claim 7 further comprising the step of processing a peptide sample according to an Edman degradation procedure to obtain said sample.

11. The method of claim 7 wherein said analytes include at least one phenylthiohydantoin amino acid.

12. The method of claim 7 wherein said chromatographic column includes a tube packed with suitable packing material (203).

13. The method of claim 7 wherein said injection solvent is weaker than at least one of said mobile phase solvents.

14. The method of claim 7 wherein the temperature of said chromatographic column (110) is controlled by a temperature controller (128).

**15.** The method of claim 7 wherein the temperature of said reservoir (108) is controlled by a temperature controller (126).

**16.** The method (300) of claim 1 in which the sample-surfactant mixture (109) forms a plug (202) on said chromatographic column (110).

**Patentansprüche**

**1.** Ein Verfahren (200) zum Trennen der Bestandteilanalyte einer Probe (105), wobei die Analyte einen Bereich an Polaritäten aufweisen, in einer chromatographischen Säule (10), wobei die Proben mindestens einen relativ polaren Analyt und mindestens einen relativ nicht-polaren Analyt aufweisen, wobei das Verfahren folgende Schritte aufweist:

Mischen (302) eines ausreichenden Oberflächen-aktiven Stoffes mit der Probe in einem chromatographisch relativ schwachen Lösungsmittel, um eine Lösung (109) zu bilden, die Mizellen des nicht-polaren Analyts enthält;

Einführen (303) der Lösung, die die Mizellen und den polaren Analyt aufweisen, in den Kopf der chromatographischen Säule, wobei die Konzentration dieses Oberflächen-aktiven Stoffes derart gewählt ist, daß die Mizellen, zumindest bis ein vorherrschender Abschnitt der Probe in dem Kopf (204) der Säule ist, beibehalten werden; und

Trennen (304) der Analyte durch eine Umgekehrte-Phase-Gradientenelution durch die Säule, wobei die Umgekehrte-Phase-Gradientenelution von dem chromatographisch relativ schwachen Lösungsmittel zu einem chromatographisch relativ starken Lösungsmittel fortschreitet, derart, daß die Mizellen während der Umgekehrte-Phase-Gradientenelution aufbrechen.

**2.** Das Verfahren gemäß Anspruch 1, bei dem der Oberflächen-aktive Stoff einen anionischen Oberflächen-aktiven Stoff aufweist.

**3.** Das Verfahren gemäß Anspruch 1, bei dem der Oberflächen-aktive Stoff einen kationischen Oberflächen-aktiven Stoff aufweist.

**4.** Das Verfahren gemäß Anspruch 1, bei dem der Oberflächen-aktive Stoff einen nicht-ionischen Oberflächen-aktiven Stoff aufweist.

**5.** Das Verfahren gemäß Anspruch 1, bei dem der Oberflächen-aktive Stoff Natrium-Dodecyl-Sulfat aufweist.

**6.** Das Verfahren gemäß Anspruch 1, bei dem die Probenanalyte nach einer Trennung in einer Sammlungseinrichtung gesammelt werden.

**7.** Das Verfahren gemäß Anspruch 1 mit folgenden Schritten:

Vorbereiten einer wässrigen Lösung aus einem Oberflächen-aktiven Stoff (107);

Vorbereiten einer Probe (105), die Analyte enthält, durch Trocknen der Probe;

Mischen (302) der wässrigen Lösung aus Oberflächen-aktivem Stoff mit der Probe, um eine Mischung (109) aus Probe und Oberflächen-aktivem Stoff zu erzeugen;

Einführen (303) der Mischung aus Probe und Oberflächen-aktivem Stoff in eine chromatographische Säule (110), wobei die Säule mit einem geeigneten Packungsmaterial (203) gepackt ist;

Trennen (304) der Probenkomponenten durch Fließen einer mobilen Phase durch die Säule;

Erfassen (305) der Anwesenheit von mindestens einer der Probenkomponenten;

Integrieren (306) der durch die Erfassung erhaltenen Daten; und

Aufzeichnen (307) der Ergebnisse der Erfassung.

**8.** Das Verfahren gemäß Anspruch 7, bei dem die mobile Phase mehrere Lösungsmittel (120) mit mobiler Phase aufweist, welche vor dem Einführen in die Säule (110) gemischt worden sind, derart, daß die Stärke der mobilen Phase während der Trennung durchgehend variiert werden kann, derart, daß die Werte k' der Analyte über der Zeit verringert werden.

**9.** Das Verfahren gemäß Anspruch 7, bei dem die mobile Phase mehrere Lösungsmittel (120) mit mobiler Phase aufweist, in denen die Analyte unterschiedliche Werte k' aufweisen, und bei dem die Lösungsmittel sequentiell in die Trenneinrichtung eingeführt werden, derart, daß die Werte k' der Analyte auf eine schrittweise Art und Weise während der Trennung variiert werden können.

**10.** Das Verfahren gemäß Anspruch 7, das ferner den Schritt des Verarbeitens einer Peptid-Probe gemäß einem Edman-Abbauverfahren aufweist, um die Probe zu erhalten.

11. Das Verfahren gemäß Anspruch 7, bei dem die Analyte mindestens eine Phenylthiohydantoin-Aminosäure aufweisen.

12. Das Verfahren gemäß Anspruch 7, bei dem die chromatographische Säule eine Röhre aufweist, die mit einem geeigneten Packungsmaterial (203) gepackt ist.

13. Das Verfahren gemäß Anspruch 7, bei dem das Injektionslösungsmittel schwacher als mindestens eines der Lösungsmittel mit mobiler Phase ist.

14. Das Verfahren gemäß Anspruch 7, bei dem die Temperatur der chromatographischen Säule (110) durch eine Temperatursteuerung (128) gesteuert wird.

15. Das Verfahren gemäß Anspruch 7, bei dem die Temperatur des Behälters (108) durch eine Temperatursteuerung (126) gesteuert wird.

16. Das Verfahren (300) gemäß Anspruch 1, bei dem die Mischung (109) aus Probe und Oberflächen-aktivem Stoff einen Bausch (202) in der chromatographischen Säule (110) bildet.

## Revendications

1. Procédé (300) pour séparer les analytes composants d'un échantillon (105), lesdits analytes ayant une gamme de polarités dans une colonne chromatographique (110), lesdits échantillons ayant au moins un analyte relativement polaire et au moins un analyte relativement non polaire, ledit procédé comprenant les étapes de:

   mélange (302) d'une quantité suffisante d'agent tensio-actif avec ledit échantillon dans un solvant chromatographiquement relativement faible de manière à former une solution (109) contenant des micelles dudit analyte non polaire;
   introduction (303) de ladite solution contenant lesdites micelles et ledit analyte polaire à la tête de ladite colonne chromatographique, la concentration de cet agent tensio-actif étant choisie de manière que lesdites micelles soient maintenues au moins jusqu'à ce que la plus grande partie dudit échantillon soit sur la tête (204) de ladite colonne; et
   séparation (304) desdits analytes par élution avec gradient à phases inversées à travers ladite colonne, ladite élution avec gradient à phases inversées procédant à partir dudit solvant chromatographiquement relativement faible jusqu'à un solvant chromatographiquement relativement fort de manière que lesdites micelles se décomposent au cours de ladite élution avec gradient à phases inversées.

2. Procédé de la revendication 1 dans lequel ledit agent tensio-actif inclut un agent tensio-actif anionique.

3. Procédé de la revendication 1 dans lequel ledit agent tensio-actif inclut un agent tensio-actif cationique.

4. Procédé de la revendication dans lequel ledit agent tensio-actif inclut un agent tensio-actif non ionique.

5. Procédé de la revendication 1 dans lequel ledit agent tensio-actif inclut du dodécyl-sulfate de sodium.

6. Procédé de la revendication dans lequel lesdits analytes échantillon sont recueillis dans un organe collecteur après séparation.

7. Procédé de la revendication 1 comprenant les étapes de:

   préparation d'une solution aqueuse d'agent tensio-actif (107);
   préparation d'un échantillon (105) contenant des analytes par séchage dudit échantillon;
   mélange (302) de ladite solution aqueuse d'agent tensio-actif avec ledit échantillon pour produire un mélange échantillon-agent tensio-actif (109);
   introduction (303) dudit mélange échantillon-agent tensio-actif dans une colonne chromatographique (110), ladite colonne étant remplie d'une matière de remplissage appropriée (203);
   séparation (304) desdits composants de l'échantillon par envoi d'une phase mobile à travers ladite colonne;
   détection (305) de la présence d'au moins un desdits composants d'échantillon;
   intégration (306) de données obtenues au moyen de ladite détection; et
   enregistrement (307) des résultats de ladite détection.

8. Procédé de la revendication 7 dans lequel ladite phase mobile inclut plusieurs solvants en phase mobile (120) qui sont mélangés entre eux avant introduction dans ladite colonne (110) afin qu'on puisse faire varier de façon continue la concentration de ladite phase mobile pendant la séparation pour que les valeurs de k' des analytes diminuent avec le temps.

9. Procédé de la revendication 7 dans lequel ladite phase mobile inclut plusieurs solvants en phase mobile (120) dans lesquels les analytes ont des valeurs de k' différentes, et où lesdits solvants sont introduits successivement sur l'organe de séparation afin qu'on puisse faire varier par étapes les valeurs de k' desdits analytes au cours de la séparation.

10. Procédé de la revendication 7 comprenant en outre l'étape de traitement d'un échantillon de peptide selon un procédé de dégradation d'Edman pour obtenir ledit échantillon.

11. Procédé de la revendication 7 dans lequel lesdits analytes comprennent au moins un acide aminé de phénylthiohydantoïne.

12. Procédé de la revendication 7 dans lequel ladite colonne chromatographique inclut un tube rempli d'une matière de remplissage appropriée (203).

13. Procédé de la revendication 7 dans lequel ledit solvant d'injection est plus faible qu'au moins un desdits solvants en phase mobile.

14. Procédé de la revendication 7 dans lequel on règle la température de ladite colonne chromatographique (110) au moyen d'un appareil de régulation de la température (128).

15. Procédé de la revendication 7 dans lequel on règle la température dudit réservoir (108) au moyen d'un appareil de régulation de la température (126).

16. Procédé (300) de la revendication 1 dans lequel le mélange échantillon-agent tensio-actif (109) forme un bouchon (202) sur ladite colonne chromatographique (110).

**Figure 1**

Figure 2

300

*Figure 3*

```
┌─────────────────────────────┐
│     OBTAINING SAMPLE        │──── 301
└─────────────────────────────┘
               │
┌─────────────────────────────┐
│    MIXING WITH SURFACTANT   │──── 302
└─────────────────────────────┘
               │
┌─────────────────────────────────────┐
│  INTRODUCING  MIXTURE ONTO  COLUMN   │──── 303
└─────────────────────────────────────┘
               │
┌─────────────────────────────────────┐
│   SEPARATING SAMPLE COMPONENTS       │──── 304
└─────────────────────────────────────┘
               │
┌─────────────────────────────────────┐
│   DETECTING SAMPLE COMPONENTS        │──── 305
└─────────────────────────────────────┘
               │
┌─────────────────────────────────────┐
│  INTEGRATING DATA FROM DETECTION     │──── 306
└─────────────────────────────────────┘
               │
┌─────────────────────────────────────┐
│ RECORDING RESULTS OF DATA DETECTION  │──── 307
└─────────────────────────────────────┘
```